# EUROPEAN PATENT SPECIFICATION

(11) **EP 3 779 412 B1**
(45) Date of publication and mention of the grant of the patent: **30.04.2025**
(21) Application number: 18921700.3
(22) Date of filing: 05.06.2018
(51) Int. Cl.: G01N 21/76, G01J 1/04, G01J 1/08, G01J 1/02

(54) **SELF-CALIBRATING WEAK LIGHT DETECTION DEVICE AND USE THEREOF**
SELBSTKALIBRIERENDER SCHWACHLICHTDETEKTOR UND SEINE VERWENDUNG
DISPOSITIF DE DÉTECTION DE LUMIÈRE FAIBLE À ÉTALONNAGE AUTOMATIQUE ET UTILISATION DE CE DERNIER

(43) Date of publication of application: 17.02.2021
(73) Proprietor: Shenzhen Increcare Biotech Co. Ltd, Shenzhen, Guangdong 518055 (CN)
(72) Inventor: ZHANG, Zhen, Shenzhen, Guangdong 518055 (CN); HE, Taiyun, Shenzhen, Guangdong 518055 (CN); LIU, Qilin, Shenzhen, Guangdong 518055 (CN); CHEN, Jianping, Shenzhen, Guangdong 518055 (CN)
(74) Representative: Novagraaf Group
(86) International application number: PCT/CN2018/090005
(87) International publication number: WO 2019/232699

(56) References cited:
- CN-A- 104 897 279
- CN-U- 202 393 496
- JP-A- H03 262 931
- US-A- 5 859 429
- US-A- 5 859 429

## Description

### Technical Field

The present disclosure relates to the technical field of chemiluminescent immunodetection equipment, in particular to a self-calibrating weak light detection device.

### Background Art

Chemiluminescent immunodetection belongs to the scope of weak light detection, temperature changes of environment often cause problems such as temperature drift to occur in the weak light detection device, resulting in inconsistent responses of the weak light detection device to the same standard signal light. In addition, due to factors such as device aging, the response of the weak light detection device also changes. The conventional weak light detection devices mostly adopt a complex calibration optical path system, in order to solve problems such as temperature drift and aging, for example, various reflectors, spectroscopes, and filters, and some calibration optical systems adopt a plurality of pieces of planar reflectors. The angular change of reflected light is 2 times the angular change of reflector. For the weak light detection device, a slight change thereof will greatly change the number of photons, which will directly affect the accuracy of calibration, moreover, such devices have a complex structure, high cost, high assembly and debugging requirements, and low mass production efficiency, furthermore, the complex structure increases the risk coefficient of its instability.

Examples of prior art devices can be found in documents US5859429 and JPH03262931.

### Summary

According to various implementations of the present disclosure, a self-calibrating weak light detection device is provided as defined in claim 1.

Details of one or more embodiments of the present disclosure are set forth in the following accompanying drawings and description. Other features, objects and advantages of the present disclosure will become apparent from the description, the accompanying drawings and the claims.

### Brief Description of Drawings

In order to better describe and illustrate these embodiments and/or examples of the present disclosure disclosed herein, reference may be made to one or more accompanying drawings. Additional details or examples for describing the accompanying drawings should not be considered as limitation to the scope of any one of the disclosed invention, embodiments and/or examples presently described and these best modes of invention presently understood.
FIG. 1 is a schematic view of a preferred embodiment of a self-calibrating weak light detection device;
FIG. 2 is a sectional view of the self-calibrating weak light detection device of FIG. 1 along a direction A-A;
FIG. 3 is a schematic view of a part including reference optical system in the self-calibrating weak light detection device of FIG. 2; and
FIG. 4 is an enlarged schematic view of part B of the self-calibrating weak light detection device of FIG. 2.

### Detailed Description of Embodiments

In order to facilitate understanding the present disclosure, the present disclosure will be more comprehensively described below with reference to relevant accompanying drawings. Preferred embodiments of the present disclosure are given in the accompanying drawings. However, the present disclosure may be realized in many different forms, but not limited to the embodiments described herein. In contrast, these embodiments are provided for the purpose of making the contents disclosed in the present disclosure more thorough and more comprehensive.

It should be indicated that when an element is "fixed" on another element, it may be directly on the another element or there may be an intermediate element therebetween. When an element is "connected to" another element, it may be directly connected to the another element or there may be an intermediate element therebetween.

Unless otherwise defined, all of the technical and scientific terms used herein have the same meanings as those generally understood by a person skilled in the art of the present disclosure. Terms used herein in the description of the present disclosure are only for the purpose of describing specific embodiments, rather than limiting the present disclosure.

A self-calibrating weak light detection device 100 is applied to chemiluminescent immunodetection, and the self-calibrating weak light detection device 100 is optically communicated with a reaction container capable of generating an optical signal in a reading compartment during use. In one embodiment, once the reaction container enters the reading compartment, a shutter disposed in the vicinity of the reaction container is closed, and shields ambient light around the reaction container. In one embodiment, the reaction container is disposed on a hole position of a chuck body, and can be rotated along with the chuck body, wherein the chuck body is located in a receiving body, and the chuck body and the receiving body together form the reading compartment. In reading, the reaction container is rotated with the chuck body to a reading station. A person skilled in the art could understand that the optical signal in the reaction container is generated by chemiluminescent reaction of reactant in the reaction container, for example, the chemiluminescent reaction of direct luminescent compound acridinium ester in corresponding pre-trigger liquid and trigger liquid, and chemiluminescent reaction of chemiluminescent substrate spiroadamantane and derivatives thereof under catalysis of alkaline phosphatase.

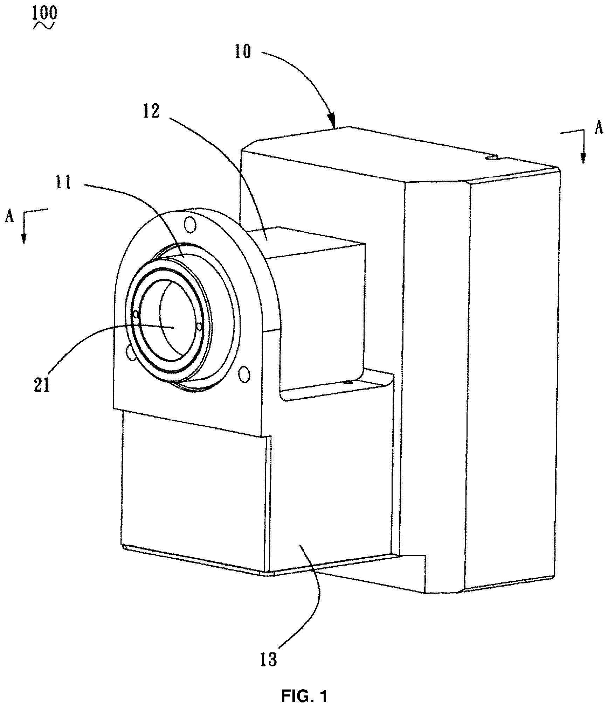

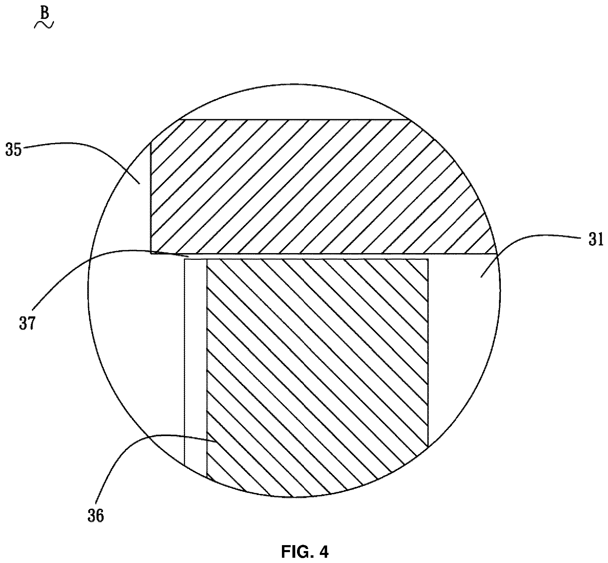

Referring to FIG. 1 to FIG. 4, the self-calibrating weak light detection device 100 of a preferred embodiment includes a housing 10, and a signal optical system 20 and a reference optical system 30 mounted in the housing 10, wherein the housing 10 is mainly configured to shield ambient light from the outside, the signal optical system 20 is configured to collect signal light and convert the signal light into electrical signal, and the reference optical system 30 provides a standard light source for calibration, which is configured for drift calibration for the signal optical system 20, so as to adjust a detection result, thus, the detection result is more accurate.

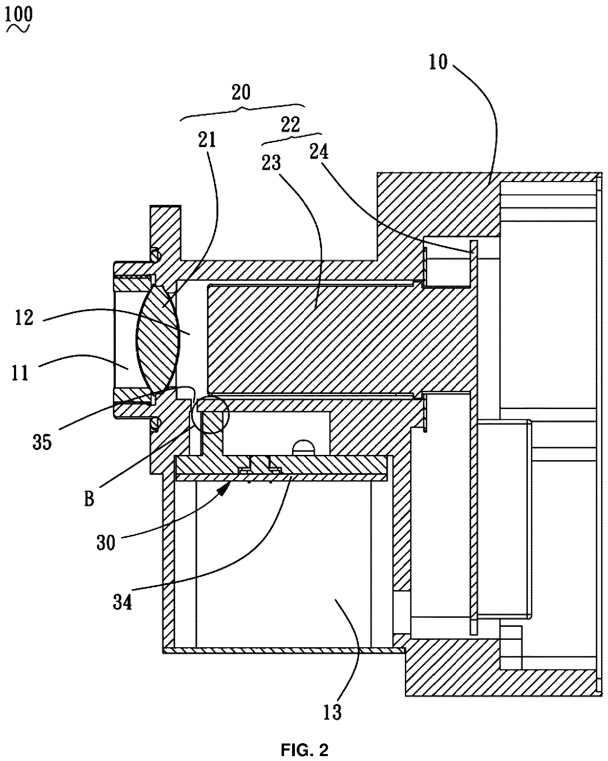

As shown in FIG. 2, the housing 10 includes a front compartment 11, a detection compartment 12 communicating with the front compartment 11 and a reference compartment 13 communicating with the signal optical system 20, wherein the front compartment 11 is adjacent to and communicates with the reading compartment.

As shown in FIG. 2, the signal optical system 20 includes a signal light collector 21 and a photon counting module 22, the signal light collector 21 and the photon counting module 22 are arranged in sequence along an emission direction of signal light, the signal light collector 21 is arranged in the front compartment 11, and the photon counting module 22 is arranged in the detection compartment 12. When testing the optical signal in the reaction container, the reaction container is placed in the reading compartment, the reactant in the reaction container undergoes chemical reaction to emit an optical signal to the surroundings, wherein a surface close to the signal light collector 21 forms a light-emitting surface, the light-emitting surface is imaged on a photosensitive surface of the photon counting module 22 through the signal light collector 21, with an imaging surface sized to just cover the photosensitive surface, or with an imaging surface slightly smaller than the photosensitive surface, so that stray light other than the light-emitting surface cannot enter the photon counting module 22, thereby reducing interference from interference light or background light. It can be understood that the position of the signal light collector 21 in the front compartment 11 can be movably adjusted, that is, a distance of the signal light collector 21 relative to the photon counting module 22 can be adjusted, so that the imaging surface better covers the photosensitive surface, and noise interference is minimized.

In one embodiment, the signal light collector 21 is a single convex lens. The convex lens has a function of collecting light, and can collect light of a light-emitting surface to be imaged and projected on the photosensitive surface of the photon counting module 22, moreover, the convex lens has a fixed focal length, which is easy for adjusting imaging. In addition, a single convex lens may further simplify the structure of the device and save the cost. In some embodiments, the signal light collector 21 further may be a lens group comprised of a plurality of convex lenses, a lens group comprised of a convex lens and a concave lens, an optical fiber or the like, and better effects of collecting light and imaging on the photosensitive surface of the photon counting module 22 can also be obtained.

In one embodiment, the photon counting module 22 includes a detector 23, the detector 23 may be an end-window photomultiplier tube (abbreviated as PMT) working in a counting mode, or a similar device capable of converting a weak optical signal into an electrical signal. The photomultiplier tube, having high sensitivity and a high response speed, which can quickly obtain a measurement result. Further, the photon counting module 22 further may include a photon counting board 24, the detector 23 is mounted on the photon counting board 24 through a mounting base, and the photon counting board 24 is further provided thereon with a voltage division circuit, a high voltage module, a high gain signal amplifier, a discriminator, a pre-divider, a data processor and so on. Those skilled in the art could understand that, in other embodiments, there may be more than one photon counting board 24 according to function division of the circuit board, for example, there may be two or more photon counting boards, and the plurality of photon counting boards communicate directly through an electric wire. An output of the pre-divider is connected to the data processor for photon pulse counting, and in some embodiments, the pre-divider further has a pulse shaping function, making the pulse signal more desirable. The optical signal, such as emitted optical signal generated from the reference optical system 30 and reaction liquid in the reaction container, may be irradiated onto the detector 23.

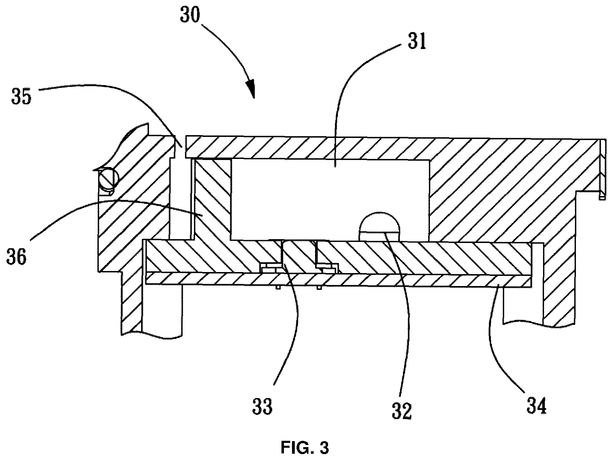

As shown in FIG. 3, the reference optical system 30 includes a diffuse reflection cavity 31, a reference light source 32 arranged in the diffuse reflection cavity 31, a photoelectric detector 33, a photoelectric control panel 34 electrically connected with reference light source 32 and the photoelectric detector 33, and a diaphragm 35 communicating the signal optical system 20 with the diffuse reflection cavity 31, wherein the photoelectric control panel 34 is electrically connected with the photon counting module 22, mainly for controlling and monitoring light emitting intensity of the reference light source 32. All of the diffuse reflection cavity 31, the reference light source 32, the photoelectric detector 33 and the photoelectric control panel 34 are mounted in the reference compartment 13, the reference compartment 13 communicates with the signal optical system 20 through the diaphragm 35, and light from the reference light source 32, after being subjected to diffuse reflection in the diffuse reflection cavity 31, enters the signal optical system 20 through the diaphragm 35, is projected onto the photosensitive surface of the photon counting module 22, and is detected by the photon counting module 22.

In the invention, the diffuse reflection cavity 31 is a cylindrical cavity, and adjacent inner side walls in the cylindrical cavity are perpendicular to each other, so that diffusely reflected light is refracted and reflected multiple times, then the optical path is increased, and diffusely reflected light with a plurality of different optical paths is obtained, so that the light emitted from the diffuse reflection cavity 31 is more uniform and random, thus improving tolerance of the optical system to manufacturing variation.

In the invention, the reference light source 32 and the photoelectric detector 33 are mounted on the same side in the diffuse reflection cavity 31, and the photoelectric detector 33 is mounted on the photoelectric control panel 34 at a mounting height lower than that of the reference light source 32, in this way, it is possible to minimize the projection of direct light from the reference light source 32 onto the photoelectric detector 33, so that the tolerance of the photoelectric detector 33 to mounting and positioning difference of the reference light source 32 is effectively improved.

In one embodiment, the diaphragm 35 is located at a side opposite to the reference light source 32, and a relatively long optical path can be obtained, further weakening the light intensity of light projected to the diaphragm 35.

In the invention, in order to further weaken the reference light entering the diaphragm 35, the diffuse reflection cavity 31 is provided therein with a light blocking device 36. For example, the light blocking device 36 is provided at a side of the diffuse reflection cavity 31 close to the diaphragm 35, a light passing channel 37 is disposed above the light blocking device 36, and a part of light of the reference light source 32, after being diffusely reflected, passes through the light passing channel 37 to enter the diaphragm 35, and then is projected to the photon counting module 22. In one embodiment, the light blocking device 36 is a vertical plate, configured to shield direct light of the reference light source 32 from entering the diaphragm 35, so as to ensure that all of the light passing through the diaphragm 35 is diffusely reflected light, and prevent a too large optical signal projected to the photon counting module 22 passing through the diaphragm 35 from damaging the photon counting module 22. Those skilled in the art could understand that the light blocking device 36 further may be other structures as long as direct light of the reference light source 32 can be shielded from entering the diaphragm 35. The light passing channel 37 may be formed between the light blocking device 36 and the diffuse reflection cavity 31, for example, the light passing channel 37 is formed between a side surface of the light blocking device 36 and a cavity wall of the diffuse reflection cavity 31; alternatively, the light passing channel also may be arranged on the light blocking device 36, for example, the light passing channel 37 is provided on the light blocking device 36, and the light passing channel 37 may be a light passing slit or pore.

In one embodiment, the inner wall of the diffuse reflection cavity 31 is coated with a diffuse reflection coating, or is provided with frosted glass, so as to obtain a better diffuse reflection effect.

The spectrum of the reference light emitted by the reference light source 32 substantially matches the spectral characteristic of the signal light detected by the photon counting module 22, in this way, the possibility of detection differences due to spectral responses of various PMT changes can be minimized.

In one embodiment, the reference light source 32 emits green light, for example, when the signal light is a light-emitting signal generated by chemical reaction of spiroadamantane and derivatives thereof in the reaction container. The reference light source 32 further may emit blue light, for example, when the signal light is a light-emitting signal generated by chemical reaction of acridinium ester in the reaction container. Preferably, the reference light source 32 adopts an LED lamp or an OLED lamp. The LED lamp and the OLED lamp, which are easy to control, and emit light stably, can be used as a standard light source, and both are surface-emitting, with relatively uniform light and relatively good diffuse reflection effect, thus preventing that light is too concentrated and most of the light is reflected to the same direction, which goes against the original intention of diffuse reflection.

In one embodiment, in order to make the structure simpler and more compact, the diaphragm 35 is a small circular hole provided on the side wall of the detection compartment 12, the diaphragm 35 communicates the detection compartment 12 with the reference compartment 13, and light of the reference light source 32, after being subjected to diffuse reflection in the diffuse reflection cavity 31, enters the signal optical system 20 through the diaphragm 35, and is projected to the photon counting module 22.

In one embodiment, the reference light further may pass through the signal light collector 21, and then be projected onto the detector 23, at this time, the diaphragm 35 may be a circular opening on the side wall of the front compartment 11, and also may correct the influence of the signal light collector 21 on the signal light collection, the diaphragm 35 communicates the front compartment with the reference compartment, and the light of the reference light source 32, after being subjected to diffuse reflection in the diffuse reflection cavity 31, enters the signal optical system 20 through the diaphragm 35, and is projected to the photon counting module 22.

In one embodiment, the diaphragm 35 is a small circular hole, with a diameter of 1~10 mm, for example, the diameter may be, but not limited to, 1 mm, 2 mm, 3.5 mm, 4 mm, 6 mm, 6.5 mm, 7 mm, 7.5 mm, 8 mm, 8.5 mm, 9 mm, 9.5 mm, or 10 mm, etc., the optical signal of the reference light source 32 passing through the diaphragm 35 can be accurately controlled, and meanwhile relatively good attenuated reference light is obtained and projected to the photon counting module 22. In other embodiments, the diaphragm 35 further may be any entity that functions to limit light beams in the optical system, such as a hard opaque material provided with a light-transmitting hole. The arrangement of the diaphragm 35 can ensure that only a small part of emitted light of the reference light source 32 is ultimately projected to the photon counting module 22, avoiding exceeding a measurement range of the photon counting module 22 and even causing device damage. In addition, the reference light entering and exiting the diaphragm 35 is diffusely reflected random light, so that the emitted light of the reference light source 32 is prevented from being directly incident on the detector of the photon counting module 22, such that inaccuracy of calibration result caused by change of installation position of the reference light source 32 can be effectively reduced.

By changing and attenuating the emitted light of the reference light source 32 by the diffuse reflection cavity 31 and the diaphragm 35, not only the use of various optical devices such as diffusion plate, attenuation sheet, and reflector in the prior art is avoided to simplify the structure, and save the cost, but also the tolerance of the self-calibrating weak light detection device 100 to variation in the producing and manufacturing process can be improved, that is, the weak light detection device 100 of the present disclosure does not have high requirement on the assembly precision of the reference light source 32.

In one embodiment, the photoelectric detector 33 is a photodiode (PD), an avalanche photodiode (APD), or other similar devices capable of converting optical signal into electrical signal. The photoelectric detector 33 is used to monitor, feedback and adjust changes of light emitting intensity of the reference light source 32.

The reference optical system 30 is configured to calibrate the signal optical system 20, and feedback, control and adjust output light intensity of the reference light source 32 through the photoelectric control panel 34. After light emitted by the reference light source 32 is diffusely reflected in the diffuse reflection cavity 31, a part of light is detected by the photoelectric detector 33, and a small part of light is projected to the photon counting module 22 through the diaphragm 35. According to structural characteristics of the diaphragm 35 and the diffuse reflection cavity 31, the optical signal of light of the reference light source 32 with specific light intensity passing through the diaphragm 35 can be quantified, the optical signal passing through the diaphragm 35 is not interfered by external factors, the optical signal received by the photoelectric detector 33 is in direct proportion to the optical signal penetrating through the diaphragm 35 and received by the photon counting module 22, in this way, the optical signals of the reference light source 32 received by the photon counting module 22 can be indirectly, accurately measured by the photoelectric detector 33 at the same time.

For example: setting that before drifting, the ratio of the optical signal received by the photoelectric detector 33 to the optical signal penetrating through the diaphragm 35 and received by the photon counting module 22 is S0 for the reference light source with light intensity X. When the photon counting module 22 drifts, the output light intensity of the reference light source 32 is controlled by the photoelectric control panel 34 to be light intensity X, then the ratio of the optical signal received by the photoelectric detector 33 to the optical signal penetrating through the diaphragm 35 and received by the photon counting module 22 is measured to be S1, which is compared with S0 before drifting, to obtain a calibration factor F.

After the calibration factor F is obtained, the reactant in the reaction container is actually measured, the reaction container filled with the reactant is placed in the reading compartment, to measure an optical signal Z of the reactant, the photon counting module 22 is compensated according to the calibration factor F, namely, the optical signal Z is calibrated and calculated, to obtain an accurate optical signal of the reactant in the reaction container, and thus achieve the self-calibrating effect.

It should be noted that, during calibration and detection, the housing 10 is communicated with the reading compartment to realize airtightness, so that external light cannot penetrate into the housing 10, thereby avoiding interference of external light.

For the self-calibrating weak light detection device 100 of the present disclosure, the signal optical system 20 is combined with the reference optical system 30, so that the probability of inaccurate measurement data caused by influence of various factors on the photon counting module 22 is reduced. The reference optical system 30 adopts a quasi-integrating sphere structure, the output light is diffusely reflected light instead of direct light, then the stability of the reference light source can be well improved, without complex optical device, then the complex structure is reduced while the calibration accuracy is improved, with improved stability, simple structure, low weight, and low producing and manufacturing requirements, thus greatly saving the cost of the device on the basis of ensuring the stability and the performance thereof.

The embodiments above are merely several implementations of the present disclosure, of which the description is relatively specific and detailed, but they should not be thus construed as limitation to the scope of the present disclosure. It should be indicated that a person ordinarily skilled in the art further could make several modifications and improvements without departing from the concept of the present disclosure, all of which fall within the scope of protection of the present disclosure. Therefore, the scope of protection of the present disclosure should be based on the claims attached.

## Claims

1. A self-calibrating weak light detection device (100), comprising:
a housing (10), wherein the housing (10) comprises a reference compartment (13), a front compartment (11) and a detection compartment (12) communicating with the front compartment (11);
a signal optical system (20), wherein the signal optical system (20) comprises a signal light collector (21) and a photon counting module (22), wherein the signal light collector (21) and the photon counting module (22) are arranged in sequence along an emission direction of signal light, the signal light collector (21) is arranged in the front compartment (11), and the photon counting module (22) is arranged in the detection compartment (12); and
a reference optical system (30) configured for calibrating the signal optical system (20), wherein the reference optical system (30) comprises a diffuse reflection cavity (31), a reference light source (32) arranged in the diffuse reflection cavity (31), a photoelectric detector (33), a photoelectric control panel (34) electrically connected with the reference light source (32) and the photoelectric detector (33), and a diaphragm (35) making the signal optical system (20) communicated with the diffuse reflection cavity (31), wherein the photoelectric control panel (34) is electrically connected with the photon counting module (22); the diffuse reflection cavity (31), the reference light source (32), the photoelectric detector (33) and the photoelectric control panel (34) are mounted in the reference compartment (13), the diaphragm (35) makes the signal optical system (20) communicated with the reference compartment (13), and light of the reference light source (32) enters the signal optical system (20) through the diaphragm (35) after being subjected to diffuse reflection in the diffuse reflection cavity (31), and is projected to the photon counting module (22), wherein the diffuse reflection cavity (31) is a cylindrical cavity,
wherein the diffuse reflection cavity (31) is provided therein with a light blocking device (36) and a light passing channel (37), so that direct light of the reference light source (32) is shielded from entering the diaphragm (35) and light of the reference light source (32) enters the diaphragm (35) through the light passing channel (37); and
the reference light source (32) is mounted on an inner surface of a side wall of the diffuse reflection cavity (31), the side wall is disposed on the photoelectric control panel (34) and the photoelectric detector (33) is mounted on the photoelectric control panel (34) at a mounting height lower than that of the reference light source (32) relative to the photoelectric control panel (34) so that after light emitted by the reference light source (32) is diffusely reflected in the diffuse reflection cavity (31), a part of light is detected by the photoelectric detector (33).

2. The self-calibrating weak light detection device (100) according to claim 1, wherein the light blocking device (36) is a vertical plate.

3. The self-calibrating weak light detection device (100) according to claim 1, wherein the diaphragm (35) is a through hole formed on a side wall of the detection compartment (12), and the reference compartment (13) communicates with the detection compartment (12) through the diaphragm (35).

4. The self-calibrating weak light detection device (100) according to claim 1, wherein the diaphragm (35) is a through hole formed on a side wall of the front compartment (11), and the reference compartment (13) communicates the front compartment (11) with the detection compartment (12) through the diaphragm (35).

5. The self-calibrating weak light detection device (100) according to claim 3 or 4, wherein the diaphragm (35) is a small circular hole.

6. The self-calibrating weak light detection device (100) according to claim 1, wherein the diaphragm (35) has a diameter of 1~10 mm.

7. The self-calibrating weak light detection device (100) according to claim 1, wherein an inner wall of the diffuse reflection cavity (31) is coated with a diffuse reflection coating, or the inner wall of the diffuse reflection cavity (31) is provided with frosted glass.

8. The self-calibrating weak light detection device (100) according to claim 1, wherein the light passing channel (37) is formed between a side surface of the light blocking device (36) and a cavity wall of the diffuse reflection cavity (31).

9. The self-calibrating weak light detection device (100) according to claim 1, wherein the light passing channel (37) is a slit or a pore provided on the light blocking device (36).

10. The self-calibrating weak light detection device (100) according to claim 1, wherein the reference light source (32) is an LED lamp or an OLED lamp.

11. The self-calibrating weak light detection device (100) according to claim 1 or 10, wherein the reference light source (32) emits green light or blue light.

12. The self-calibrating weak light detection device (100) according to any one of claims 1 to 2, wherein the photoelectric detector (33) is a photodiode or an avalanche photodiode.

13. The self-calibrating weak light detection device (100) according to any one of claims 1 to 2, wherein the signal light collector (21) is a single convex lens.

14. The self-calibrating weak light detection device (100) according to any one of claims 1 to 2, wherein the photon counting module (22) comprises a photon counting board (24) and a detector (23) mounted on the photon counting board (24),
preferably, wherein the detector (23) is a photomultiplier tube.

15. Use of the self-calibrating weak light detection device (100) according to any one of claims 1 to 14, **characterized by** being applicable to chemiluminescent immunodetection.

## Patentansprüche

1. Selbstkalibrierende Schwachlichtdetektionsvorrichtung (100), umfassend:
ein Gehäuse (10), wobei das Gehäuse (10) ein Referenzfach (13), ein Frontfach (11) und ein mit dem Frontfach (11) kommunizierendes Detektionsfach (12) umfasst;
ein optisches Signalsystem (20), wobei das optische Signalsystem (20) einen Signallichtkollektor (21) und ein Photonenzählmodul (22) umfasst, wobei der Signallichtkollektor (21) und das Photonenzählmodul (22) entlang einer Emissionsrichtung von Signallicht nacheinander angeordnet sind, wobei der Signallichtkollektor (21) im Frontfach (11) angeordnet ist und das Photonenzählmodul (22) im Detektionsfach (12) angeordnet ist; und
ein optisches Referenzsystem (30), das zum Kalibrieren des optischen Signalsystems (20) konfiguriert ist, wobei das optische Referenzsystem (30) einen diffusen Reflexionshohlraum (31), eine in dem diffusen Reflexionshohlraum (31) angeordnete Referenzlichtquelle (32), einen photoelektrischen Detektor (33), ein photoelektrisches Bedienfeld (34), das elektrisch mit der Referenzlichtquelle (32) und dem photoelektrischen Detektor (33) verbunden ist, und eine Blende (35) umfasst, die das optische Signalsystem (20) mit dem diffusen Reflexionshohlraum (31) in Kommunikation bringt, wobei das photoelektrische Bedienfeld (34) elektrisch mit dem Photonenzählmodul (22) verbunden ist; wobei der diffuse Reflexionshohlraum (31), die Referenzlichtquelle (32), der photoelektrische Detektor (33) und das photoelektrische Bedienfeld (34) im Referenzfach (13) montiert sind, die Blende (35) das optische Signalsystem (20) mit dem Referenzfach (13) in Kommunikation bringt, und Licht der Referenzlichtquelle (32) durch die Blende (35) in das optische Signalsystem (20) eintritt, nachdem es einer diffusen Reflexion im diffusen Reflexionshohlraum (31) unterzogen wurde, und auf das Photonenzählmodul (22) projiziert wird, wobei der diffuse Reflexionshohlraum (31) ein zylindrischer Hohlraum ist,
wobei der diffuse Reflexionshohlraum (31) darin mit einer Lichtblockierungsvorrichtung (36) und einem Lichtdurchgangskanal (37) versehen ist, so dass direktes Licht der Referenzlichtquelle (32) daran gehindert wird, in die Blende (35) einzutreten, und Licht der Referenzlichtquelle (32) durch den Lichtdurchgangskanal (37) in die Blende (35) eintritt; und
wobei die Referenzlichtquelle (32) an einer Innenoberfläche einer Seitenwand des diffusen Reflexionshohlraums (31) montiert ist, wobei die Seitenwand auf dem photoelektrischen Bedienfeld (34) angeordnet ist und der photoelektrische Detektor (33) auf dem photoelektrischen Bedienfeld (34) in einer Montagehöhe montiert ist, die niedriger ist als die der Referenzlichtquelle (32) relativ zum photoelektrischen Bedienfeld (34), so dass, nachdem von der Referenzlichtquelle (32) emittiertes Licht diffus in den diffusen Reflexionshohlraum (31) reflektiert wurde, ein Teil des Lichts von dem photoelektrischen Detektor (33) detektiert wird.

2. Selbstkalibrierende Schwachlichtdetektionsvorrichtung (100) nach Anspruch 1, wobei die Lichtblockierungsvorrichtung (36) eine vertikale Platte ist.

3. Selbstkalibrierende Schwachlichtdetektionsvorrichtung (100) nach Anspruch 1, wobei die Blende (35) ein Durchgangsloch ist, das an einer Seitenwand des Detektionsfachs (12) ausgebildet ist, und das Referenzfach (13) durch die Blende (35) mit dem Detektionsfach (12) kommuniziert.

4. Selbstkalibrierende Schwachlichtdetektionsvorrichtung (100) nach Anspruch 1, wobei die Blende (35) ein Durchgangsloch ist, das an einer Seitenwand des Frontfachs (11) ausgebildet ist, und das Referenzfach (13) das Frontfach (11) durch die Blende (35) mit dem Detektionsfach (12) in Kommunikation bringt.

5. Selbstkalibrierende Schwachlichtdetektionsvorrichtung (100) nach Anspruch 3 oder 4, wobei die Blende (35) ein kleines kreisförmiges Loch ist.

6. Selbstkalibrierende Schwachlichtdetektionsvorrichtung (100) nach Anspruch 1, wobei die Blende (35) einen Durchmesser von 1 bis etwa 10 mm aufweist.

7. Selbstkalibrierende Schwachlichtdetektionsvorrichtung (100) nach Anspruch 1, wobei eine Innenwand des diffusen Reflexionshohlraums (31) mit einer diffusen Reflexionsbeschichtung beschichtet ist oder die Innenwand des diffusen Reflexionshohlraums (31) mit Milchglas versehen ist.

8. Selbstkalibrierende Schwachlichtdetektionsvorrichtung (100) nach Anspruch 1, wobei der Lichtdurchgangskanal (37) zwischen einer Seitenoberfläche der Lichtblockierungsvorrichtung (36) und einer Hohlraumwand des diffusen Reflexionshohlraums (31) ausgebildet ist.

9. Selbstkalibrierende Schwachlichtdetektionsvorrichtung (100) nach Anspruch 1, wobei der Lichtdurchgangskanal (37) ein Schlitz oder eine Pore ist, der bzw. die an der Lichtblockierungsvorrichtung (36) bereitgestellt ist.

10. Selbstkalibrierende Schwachlichtdetektionsvorrichtung (100) nach Anspruch 1, wobei die Referenzlichtquelle (32) eine LED-Lampe oder eine OLED-Lampe ist.

11. Selbstkalibrierende Schwachlichtdetektionsvorrichtung (100) nach Anspruch 1 oder 10, wobei die Referenzlichtquelle (32) grünes Licht oder blaues Licht emittiert.

12. Selbstkalibrierende Schwachlichtdetektionsvorrichtung (100) nach einem der Ansprüche 1 bis 2, wobei der photoelektrische Detektor (33) eine Photodiode oder eine Lawinenphotodiode ist.

13. Selbstkalibrierende Schwachlichtdetektionsvorrichtung (100) nach einem der Ansprüche 1 bis 2, wobei der Signallichtkollektor (21) eine einzelne konvexe Linse ist.

14. Selbstkalibrierende Schwachlichtdetektionsvorrichtung (100) nach einem der Ansprüche 1 bis 2, wobei das Photonenzählmodul (22) eine Photonenzählplatine (24) und einen auf der Photonenzählplatine (24) montierten Detektor (23) umfasst,
wobei vorzugsweise der Detektor (23) eine Photovervielfacherröhre ist.

15. Verwendung der selbstkalibrierenden Schwachlichtdetektionsvorrichtung (100) nach einem der Ansprüche 1 bis 14, **dadurch gekennzeichnet, dass** sie auf die chemilumineszierende Immundetektion anwendbar ist.

## Revendications

1. Dispositif de détection de lumière faible à étalonnage automatique (100), comprenant :
un boîtier (10), dans lequel le boîtier (10) comprend un compartiment de référence (13), un compartiment avant (11) et un compartiment de détection (12) communiquant avec le compartiment avant (11) ;
un système optique de signal (20), dans lequel le système optique de signal (20) comprend un capteur de lumière de signal (21) et un module de comptage de photons (22), dans lequel le capteur de lumière de signal (21) et le module de comptage de photons (22) sont disposés en séquence le long d'une direction d'émission d'une lumière de signal, le capteur de lumière de signal (21) est disposé dans le compartiment avant (11), et le module de comptage de photons (22) est disposé dans le compartiment de détection (12) ; et
un système optique de référence (30) configuré pour étalonner le système optique de signal (20), dans lequel le système optique de référence (30) comprend une cavité de réflexion diffuse (31), une source de lumière de référence (32) disposée dans la cavité de réflexion diffuse (31), un détecteur photoélectrique (33), un panneau de commande photoélectrique (34) connecté électriquement à la source de lumière de référence (32) et au détecteur photoélectrique (33), et un diaphragme (35) faisant communiquer le système optique de signal (20) avec la cavité de réflexion diffuse (31), dans lequel le panneau de commande photoélectrique (34) est connecté électriquement au module de comptage de photons (22) ; la cavité de réflexion diffuse (31), la source de lumière de référence (32), le détecteur photoélectrique (33) et le panneau de commande photoélectrique (34) sont montés dans le compartiment de référence (13), le diaphragme (35) fait communiquer le système optique de signalisation (20) avec le compartiment de référence (13), et une lumière de la source de lumière de référence (32) pénètre dans le système optique de signal (20) à travers le diaphragme (35) après avoir été soumise à une réflexion diffuse dans la cavité de réflexion diffuse (31), et est projetée vers le module de comptage de photons (22), dans lequel la cavité de réflexion diffuse (31) est une cavité cylindrique,
dans lequel la cavité de réflexion diffuse (31) est pourvue dans celle-ci d'un dispositif de blocage de lumière (36) et d'un canal de passage de lumière (37), de sorte qu'une lumière directe de la source de lumière de référence (32) est protégée contre la pénétration dans le diaphragme (35) et qu'une lumière de la source de lumière de référence (32) pénètre dans le diaphragme (35) à travers le canal de passage de lumière (37) ; et
la source de lumière de référence (32) est montée sur une surface interne d'une paroi latérale de la cavité de réflexion diffuse (31), la paroi latérale est disposée sur le panneau de commande photoélectrique (34) et le détecteur photoélectrique (33) est monté sur le panneau de commande photoélectrique (34) à une hauteur de montage inférieure à celle de la source de lumière de référence (32) par rapport au panneau de commande photoélectrique (34) de sorte qu'après qu'une lumière émise par la source de lumière de référence (32) a été réfléchie de manière diffuse dans la cavité de réflexion diffuse (31), une partie de la lumière est détectée par le détecteur photoélectrique (33).

2. Dispositif de détection de lumière faible à étalonnage automatique (100) selon la revendication 1, dans lequel le dispositif de blocage de lumière (36) est une plaque verticale.

3. Dispositif de détection de lumière faible à étalonnage automatique (100) selon la revendication 1, dans lequel le diaphragme (35) est un trou traversant formé sur une paroi latérale du compartiment de détection (12), et le compartiment de référence (13) communique avec le compartiment de détection (12) à travers le diaphragme (35).

4. Dispositif de détection de lumière faible à étalonnage automatique (100) selon la revendication 1, dans lequel le diaphragme (35) est un trou traversant formé sur une paroi latérale du compartiment avant (11), et le compartiment de référence (13) fait communiquer le compartiment avant (11) avec le compartiment de détection (12) à travers le diaphragme (35).

5. Dispositif de détection de lumière faible à étalonnage automatique (100) selon la revendication 3 ou 4, dans lequel le diaphragme (35) est un petit trou circulaire.

6. Dispositif de détection de lumière faible à étalonnage automatique (100) selon la revendication 1, dans lequel le diaphragme (35) a un diamètre de 1 à 10 mm.

7. Dispositif de détection de lumière faible à étalonnage automatique (100) selon la revendication 1, dans lequel une paroi interne de la cavité de réflexion diffuse (31) est revêtue d'un revêtement de réflexion diffuse, ou la paroi interne de la cavité de réflexion diffuse (31) est pourvue d'un verre givré.

8. Dispositif de détection de lumière faible à étalonnage automatique (100) selon la revendication 1, dans lequel le canal de passage de lumière (37) est formé entre une surface latérale du dispositif de blocage de lumière (36) et une paroi de cavité de la cavité de réflexion diffuse (31).

9. Dispositif de détection de lumière faible à étalonnage automatique (100) selon la revendication 1, dans lequel le canal de passage de lumière (37) est une fente ou un pore prévu sur le dispositif de blocage de lumière (36).

10. Dispositif de détection de lumière faible à étalonnage automatique (100) selon la revendication 1, dans lequel la source de lumière de référence (32) est une lampe LED ou une lampe OLED.

11. Dispositif de détection de lumière faible à étalonnage automatique (100) selon la revendication 1 ou 10, dans lequel la source de lumière de référence (32) émet une lumière verte ou une lumière bleue.

12. Dispositif de détection de lumière faible à étalonnage automatique (100) selon l'une quelconque des revendications 1 à 2, dans lequel le détecteur photoélectrique (33) est une photodiode ou une photodiode à avalanche.

13. Dispositif de détection de lumière faible à étalonnage automatique (100) selon l'une quelconque des revendications 1 à 2, dans lequel le capteur de lumière de signal (21) est une seule lentille convexe.

14. Dispositif de détection de lumière faible à étalonnage automatique (100) selon l'une quelconque des revendications 1 à 2, dans lequel le module de comptage de photons (22) comprend une planche de comptage de photons (24) et un détecteur (23) monté sur la planche de comptage de photons (24),
de préférence, dans lequel le détecteur (23) est un tube photomultiplicateur.

15. Utilisation du dispositif de détection de lumière faible à étalonnage automatique (100) selon l'une quelconque des revendications 1 à 14,
**caractérisée en ce qu'**il est applicable à l'immunodétection par chimiluminescence.
